Europäisches Patentamt

European Patent Office

Office européen des brevets

(19)

(11) Publication number: **0 047 970**
**B1**

(12) EUROPEAN PATENT SPECIFICATION

(45) Date of publication of patent specification: 25.04.84

(51) Int. Cl.³: **H 04 L 5/14, H 04 L 7/02**

(21) Application number: 81107062.2

(22) Date of filing: 08.09.81

(54) Method and device for synchronizing the receiving terminal of a "ping-pong" communication system.

(30) Priority: 11.09.80 IT 6840080

(43) Date of publication of application:
24.03.82 Bulletin 82/12

(45) Publication of the grant of the patent:
25.04.84 Bulletin 84/17

(84) Designated Contracting States:
DE FR GB NL SE

(56) References cited:
US - A - 3 028 487
US - A - 4 122 397

INTERNATIONAL SWITCHING SYMPOSIUM,
vol. 2, May 1979, PARIS (FR) Comité du C.I.C.,
Paris, R. MONTEMURRO et al.: "Réalisation d'un
equipement terminal numérique d'abonné pour
service téléphonique et de données", pages 926-
933

NTG-FACHBERICHTE ISSLS 80, vol. 73,
September 15-19, 1980, MÜNICH (DE) VDE-
Verlag GmbH, Berlin, R. FOSSATI et al.: "A
remote powered digital telephone set: problems,
performance and prospects", pages 60-63

(73) Proprietor: CSELT Centro Studi e Laboratori
Telecomunicazioni S.p.A.
Via Guglielmo Reiss Romoli, 274
I-10148 Turin (IT)

(72) Inventor: Fossati, Roberto
C.so. Vittorio, 174
Turin (IT)
Inventor: Gallo, Secondo
Via Osoppo, 63
Turin (IT)
Inventor: Lazzari, Vincenco
Via Nigra 10
Leini-Turin (IT)
Inventor: Ravaglia, Renzo
Via Maroncelli 5
Firenze (IT)

(74) Representative: Riederer Freiherr von Paar zu
Schönau, Anton
Freyung 615 Postfach 2664
D-8300 Landshut (DE)

Method and device for synchronizing the receiving terminal of a "ping-pong" communication system

The present invention relates to a synchronizing system for ping-pong transmissions, i.e. transmissions in which the two terminals alternatingly transmit and receive, each one for less than half a cycle time. In particular, but not exclusively the invention relates to a synchronizing system for the receiving set of a digital telephone.

The correct synchronization of the receiving terminal, which is generally attained by extracting from the received signal one of the frequencies contained therein, is of main importance in a ping-pong transmission. The extraction can be effected by means of analog or quartz filters as is known from US—A—3 028 487, or even by means of phaselock circuits as is known from INTERNATIONAL SWITCHING SYMPOSIUM, vol. 2, May 1979, Paris (FR), Comité du C.I.C., Paris, R. MONTEMURRO et al.: "Realisation d'un équipement terminal numérique d'abonné pour service téléphonique et de données", pages 926 to 933, particularly paragraph 4.3. In the particular application to the digital telephone, the basic requirements are the simplicity and low cost of the adopted apparatus, and an easy component integration.

Therefore the phase lock circuits have been chosen, as the analog filters are difficult to integrate, and quartz filters are rather expensive. As known, the operation of a phase-lock circuit requires a control frequency which is to be extracted from the received signal; advantageously this frequency can be the repetition frequency of such a signal, as it is the most evident among the available frequencies.

The most obvious solution to the problem of extracting this frequency would be using a passband filter (a notch filter), but this gives rise to the above mentioned inconvenience of a difficult component integration.

These disadvantages are overcome by the present invention of a method and an apparatus for synchronizing ping-pong transmission systems, in which also the extraction of the control signal for the phaselock circuit is obtained by means which are easy to integrate.

It is a particular object of the present invention to provide a method of synchronizing the receiving terminal in ping-pong, time division communications systems wherein a signal with a frequency equal to the repetition frequency of the received signal is used as synchronism signal, said synchronism signal being extracted from the received signal by a phaselock circuit, and wherein from said received signal representative of its envelope is extracted and is sent to said phaselock circuit as a control signal.

It is a further object of the present invention to provide apparatus for performing the method.

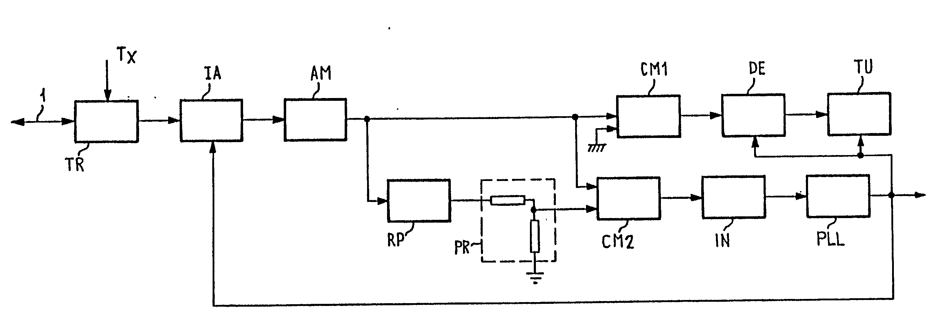

For a better understanding reference is made to the accompanying drawing, which schematically represents the receiver of a ping-pong transmission system equipped with the apparatus according to the present invention.

In the drawing, reference 1 denotes a bidirectional line (e.g. a telephone line) on which a time-division transmission is effected with the method known as "ping-pong". According to this method, the exchange sends to the subscriber a word of appropriate length, which is received with a delay depending on the connection length, and when said word has been wholly received the subscriber sends an analogous word to the exchange; the transmission and reception cycles are repeated every 125 $\mu$s. When necessary, reference is made in this specification to the case in which 10 bit words are transmitted, the first bit having always a fixed value (e.g. 1) for the reasons which will be explained herein below. Line 1 is connected to a transformer TR, of which a branch is connected to the transmission devices, schematized by arrow TX. Another branch of transformer TR is connected to an analog switch IA, which has the task of avoiding power dissipation on the load impedance of the receiver during the transmission phases. Switch IA is followed by an amplifier AM which in turn if followed by a comparator CM1, which converts the received signals into logic signals and sends these logic signals to a decision device DE DE will then be connected to the subscriber's terminal(s) schematized by block TU.

The output of amplifier AM is also connected to the input of a peak detector RP and to a first input of a second comparator CM2, which receives at a second input, as threshold voltage, a signal equal to a suitable fraction of the peak voltage. CM2 supplies at the output a logic "1" when the input signal exceeds the threshold voltage. Said voltage is obtained from the output voltage of RP by means of a conventional divider PR. Advantageously the threshold voltage is half the peak voltage: by this value, the input signal is sampled in correspondence with its point of maximum slope, which facilitates decision operations.

Comparator CM2 is followed by an integrator IN which supplies at its output the input signal signal envelope; the envelope signal is the control signal for a phaselock circuit PLL which supplies the timing to all the circuits of the device: in particular PLL will control the analog switch IA, decision device DE, subscriber's terminal TU, etc. The timing signals are obtained from a signal with a frequency equal to the transmission frequency on the line, which PLL extracts from the received signals. The set of RP, PR, CM2, IN forms the envelope detector carrying out the process according to the invention.

It is to be pointed out that many circuits like PLL offer the best performance when their input signal is a square wave; in addition it is obvious that the input signal should be stable (i.e. it should not present any jitter) whatever the arriving word may be. To this end words could be transmitted in which both the first and the last bit have a fixed logic value (which requires longer words and is detrimental to the information transmission capacity). As an alternative, if the use of fixed bits is not desirable, two circuit chains can be used each comprising a peak detector RP, a divider PR and a comparator CM2 and designed to process the positive or negative wavefronts, respectively; the integrator could be controlled by the 'OR' combination of the output signals of the two chains.

Yet, from the structure simplicity and performance standpoint it has been proved more advantageous to use a fixed initial bit alone (so that the received signal always begins in the same way and the second chain of devices to detect its envelope is unnecessary) and to insert between the integrator IN and the circuit PLL a monostable element, which is actuated in correspondence with the fixed transition and which, due to its characteristics, renders also the second transition fixed.

It is clear that the aforementioned has been given by way of example and not in a limiting sense and that variations and modifications are possible within the scope of the invention as defined in the appended claims.

**Claims**

1. Method of synchronizing the receiving terminal in a ping-pong, time division communication system, wherein a signal with a frequency equal to the repetition frequency of the received signal is used as a synchronism signal which is extracted from the received signal by a phaselock circuit(PLL), characterized in that from said received signal a signal representative of its envelope is extracted and is sent to said phaselock circuit as a control signal.

2. Method according to claim 1, characterized in that, for extracting said envelope signal, a signal proportional to the peak voltage of the received signal is generated, said received signal is converted into a logic signal which can assume either logic value depending on whether the value of the received signal is higher or lower than the value of the signal proportional to the peak voltage, and said logic signal is integrated.

3. Method according to claim 2, characterized in that said signal proportional to the peak voltage has a value equal to half said peak voltage.

4. Method according to claim 2, characterized in that the integrated signal is converted into a square wave.

5. Apparatus for synchronizing the receiving terminal of a ping-pong time division communication system, wherein a phaselock circuit (PLL) extracts from the received signal a signal at a frequency equal to the transmission frequency, which is used as synchronism signal for the devices of said terminal, characterized in that an envelope detector (RP, CM2, IN) is connected to the input of said phaselock circuit (PLL) and sends the phaselock circuit (PLL), as a control signal, a signal representing the envelope of the received signal.

6. Apparatus according to claim 5, characterized in that the envelope detector comprises:

a detector (RP) of the peak voltage of the received signal, adapted to provide a signal whose amplitude is proportional to said peak voltage;

a comparator (CM2) which receives at its two inputs the received signal and the detector output signal and supplies at the output logic signals with either value depending on whether or not the amplitude of the received signal exceeds the proportion of the peak voltage;

an integrator (IN) which receives the logic signals outgoing from the comparator and supplies at the output towards the phaselock circuit the envelope of the received signal.

7. Apparatus according to claim 6, characterized in that said integrator is followed by a monostable element which converts said envelope signal into a square wave.

**Revendications**

1. Procédé pour synchroniser un terminal de réception d'un système de communication par multilexage dans le temps du type à "ping-pong", où on l'emploie comme signal de synchronisation un signal qui a une fréquence égale à la fréquence de répétition du signal reçu et qui est extrait de ce dernier au moyen d'une boucle à verrouillage de phase (PLL), caractérisé en ce qu'on extrait dudit signal reçu un signal représentatif de son enveloppe et on l'envoie a ladite boucle à verrouillage de phase comme signal de commande.

2. Procédé suivant la revendication 1, caractérisé en ce que pour extraire ledit signal d'enveloppe on engendre un signal proportionnel à la tension de crête du signal reçu, on transforme ledit signal reçu en un signal logique qui peut prendre l'une ou l'autre valeur logique suivant que la valeur du signal reçu est supérieure ou inférieure à la valeur du signal proportionnel à la tension de crête, et on intègre ledit signal logique.

3. Procédé suivant la revendication 2, caractérisé en ce que ledit signal proportionnel à la tension de crête a une valeur égale à moitié la ladite tension de crête.

4. Procédé suivant la revendication 2, caractérisé en ce que le signal intégré est transformé dans une onde carrée.

5. Dispositif pour synchroniser un terminal de réception d'un système de communication par multiplexage dans le temps du type à "ping-pong", où une boucle à verrouillage de phase (PLL) extrait du signal reçu un signal à fréquence égale à la fréquence de transmission, que l'on utilise comme signal de synchronisation pour les organes dudit terminal, caractérisé en ce que l'entrée de ladite boucle à verrouillage de phase (PLL) est connectée à un détecteur d'enveloppe (RP, CM2, IN) qui fournit à la boucle à verrouillage de phase (PLL), comme signal de commande, un signal representatif de l'enveloppe du signal reçu.

6. Dispositif suivant la revendication 5, caractérisé en ce que le détecteur d'enveloppe comprend:

un détecteur(RP) de la tension de crête du signal reçu, apte à fournir un signal dont l'amplitude est proportionnelle à ladite tension de crête;

un comparateur (CM2) qui reçoit à ses deux entrées le signal reçu et le signal de sortie dlu détecteur et émet des signaux logiques ayant l'une ou l'autre valeur suivant que l'amplitude du signal reçu excède ou non la proportion de la tension de crête;

un intégrateur (IN) qui reçoit le signaux logiques sortant du comparateur et émet vers la boucle à verouillage de phase l'enveloppe du signal reçu.

7. Dispositif suivant la revendication 6, caractérisé en ce que l'intégrateur est suivi d'un élément monostable qui transforme dans une onde carrée ledit signal d'enveloppe.

**Patentansprüche**

1. Verfahren zum Synchronisieren der Empfängestation in einem ping-pong-zeitmultiplexen Kommumikationssystem, bei dem also die beiden Stationen alternierend senden und empfangen, unter Verwendung eines Signals mit einer Frequenz gleich der Wiederholungsfrequenz des empfangenen Signals als Synchronisationssignal, das man mit Hilfe einer Phasenverriegelungsschaltung (PLL) aus dem empfangenen Signal extrahiert, dadurch gekennzeichnet, daß man aus dem empfangenen Signal ein dessen Hüllkurve wiedergebendes Signal extrahiert, das man als Steuersignal der Phasenverriegelungsschaltung einspeist.

2. Verfahren nach Anspruch 1, dadurch gekennzeichnet, daß man zum Extraheiren des Hüllkurvensignals ein der Scheitelspannung des empfangenen Signals proportionales Signal erzeugt, daß man das empfangene Signal in ein logisches Signal umwandelt, das beide booleschen Werte in Abhängigkeit davon abnehmen kann, ob der Wert des empfangenen Signals höher oder neidriger als der Wert des der Scheitelspannung proportionalen Signals ist, und daß man das logische Signal integriert.

3. Verfahren nach Anspruch 2, dadurch gekennzeichnet, daß das der Scheitelspannung proportionale Signal einen Wert gleich der Hälfte der Scheitelspannung hat.

4. Verfahren nach Anspruch 2, dadurch gekennzeichnet, daß man das integrierte Signal in eine Rechteckwelle umwandelt.

5. Vorrichtung zum Synchronisieren der Empfansstation eines ping-pong-zeitmultiplexen Kommunikationssystems, bei dem eine Phasenverriegelungsschaltung (PLL) aus dem empfangenen Signal ein Signal einer Frequenz gleich der Übertragungsfrequenz extrahiert, das als Synchronismussignal für die Schaltungen dieser Station dient, dadurch gekennzeichnet, daß an den Eingang der Phasenverriegelungsschaltung (PLL) ein Hüllkurvendetektor (RP, CM2, IN) angeschlossen ist, der an die Phasenverriegelungsschaltung (PLL) als Steuersignal ein Signal abgibt, das die Hüllkurve des empfangenen Signals wiedergibt.

6. Vorrichtung nach Anspruch 5, dadurch gekennzeichnet, daß der Hüllkurvendetektor folgende Einzelschaltungen umfaßt:

einen Detektor (RP) der Scheitelspannung des empfangenen Signals, der ein Signal mit einer Amplitude, die der Scheitelspannung proportional ist, liefern kann;

einen Komparator (CM2), der an seinen beiden Eingängen einer seits das empfangene Signal und andererseits das Ausgangssignal des Detektors empfängt und ausgangsseitig logische Signale abgibt, deren positiver oder negativer Wert davon abhängt, ob die Amplitude des empfangenen Signals den Proportional-Bruchteil der Scheitelspannung überschreitet oder nicht; und

einen Integrator (IN), der die vom Komparator ausgehenden logischen Signale empfängt und ausgangsseitig an die Phasenverriegelungsschaltung das Hüllkurvensignal des empfangenen Signals abgibt.

7. Vorrichtung nach Anspruch 6, dadurch gekennzeichnet, daß dem Integrator ein monostabiles Element nachgeschaltet ist, das das Hüllkurvensignal in eine Rechteckwelle umwandelt.